# EUROPÄISCHE PATENTSCHRIFT

(11) **EP 1 225 119 B1**
(45) Veröffentlichungstag und Bekanntmachung des Hinweises auf die Patenterteilung: **22.09.2004**
(21) Anmeldenummer: 02001476.7
(22) Anmeldetag: 22.01.2002
(51) Int. Cl.: B62D 25/20, B60G 21/055

(54) **Kraftfahrzeug, insbesondere Cabrio, mit aktiv angesteuerten Torsionsstabilisatoren**
Motor vehicle, particularly convertible, with actively controlled torsion stabilizers
Véhicule, en particulier cabriolet, avec des barres antiroulis à torsion commandées activement

(30) Priorität: 23.01.2001 DE 10102910
(43) Veröffentlichungstag der Anmeldung: 24.07.2002
(73) Patentinhaber: Eras Entwicklung und Realisation adaptiver Systeme GmbH, 37085 Göttingen (DE); Wilhelm Karmann GmbH, D-49084 Osnabrück (DE)
(72) Erfinder: Gnauert, Uwe, Dr., 37083 Göttingen (DE); Fehren, Heinrich, Dr., 34127 Kassel (DE); Kohlrautz, Daniel, Dipl.-Ing., 37115 Duderstadt (DE); Siebald, Hubertus, Dipl.-Phys., 37124 Rosdorf (DE); Wimmel, Roger, Dipl.-Phys, 37124 Rosdorf (DE)
(74) Vertreter: Patentanwälte Rehberg + Hüppe

(56) Entgegenhaltungen:
- EP-A- 0 829 393
- EP-A- 1 209 366
- DE-A- 19 820 617
- US-A- 3 645 173

## Beschreibung

Die Erfindung bezieht sich auf ein Kraftfahrzeug, insbesondere Cabrio, mit den Merkmalen des Oberbegriffs des Patentanspruchs 1.

Es ist bekannt, daß verschiedene Kraftfahrzeuge, insbesondere Cabrios, eine relativ torsionsweiche Karosserie aufweisen. So treten durch Anregungen aufgrund unebener Fahrbahnen schnell Torsionsschwingungen der Karosserie auf. Bei Cabrios ist die besonders geringe Torsionssteifigkeit auf die fehlende Aussteifung der Karosserie durch ein festes Dach zurückzuführen. Bei Cabrios treten im signifikanten Umfang auch Biegeschwingungen um eine Querachse des Kraftfahrzeugs im Bereich der Türöffnungen auf. Die Torsionsschwingungen erfolgen demgegenüber um die Längsachse des Kraftfahrzeugs.

Aus der DE 198 206 17 A und der EP 0 955 228 A ist ein Kraftfahrzeug mit den Merkmalen des Oberbegriffs des Patentanspruchs 1 bekannt. Hierbei handelt es sich um ein Kraftfahrzeug, insbesondere ein Cabrio, mit einer Karosserie, der einen Längsverlauf aufweisende Streben als Torsionsstabilisatoren zugeordnet sind. In einer Ausführungsform sind zwei der streben längenvariabel ausgebildet und es sind ihnen Aufnahmeeinheiten zur Erfassung einer Längsbeanspruchung, Stellglieder zum bewirken einer dagegen gerichteten Gegenkraft sowie eine Steuerung für die Ansteuerung der Stellglieder zugeordnet. Bei den Stellgliedern handelt es sich in der einzigen konkreten Ausführungsform um Piezoelemente, die allgemeiner auch als Spannungs-Druck-Wandler beschrieben werden. In jedem Fall sind die aus der EP 0 955 228 A2 bekannten längenveränderlichen Torsionsstabilisatoren zur Aufnahme von Druckbeanspruchung ausgelegt. In der Praxis stellt sich heraus, daß Piezoelemente nur mit sehr großem Aufwand in der Lage sind, die für eine wesentliche Torsionsstabilisierung der Karosserie eines Kraftfahrzeugs notwendigen Längenveränderungen der Streben zu bewirken. Hierzu müssen dann unter anderem erhebliche elektrische Spannungen erzeugt werden, um sie an die Piezoelemente anzulegen. So können dann zwar Torsionen im dynamischen Bereich, d. h. Torsionsschwingungen, des jeweiligen Kraftfahrzeugs merklich unterdrückt werden. Statische Torsionen des Kraftfahrzeugs, beispielsweise aufgrund einer unebenen Aufstandfläche können aber nicht verhindert werden. Derartige statische Torsionen äußern sich beispielsweise in einer Verformung der Türöffnung und daraus resultierenden Problemen beim Öffnen und Schließen der Tür eines Cabrios.

Aus der US 3 645 173 A und der GB 1 331 756 A ist ein Schlauchaktuator bekannt, der sich bei Beaufschlagung seines Innenraums mit einem Hydraulikmedium im Durchmesser erweitert und gleichzeitig zwischen seinen Anbindungspünkten verkürzt. Die Durchmessererweiterung erfolgt vorwiegend im Mittelbereich des Schlauchaktuators zwischen seinen beiden Anbindungspunkten. Die Umsetzung des Drucks im Innenraum des Aktuators in eine Durchmesservergrößerung und eine gleichzeitige Längenverkürzung wird durch dehnungsfeste Einoder Auflagen in Verbindung mit einer elastischen Wandung des Schlauchaktuators erzielt.

Weiterentwicklungen des aus der US 3645173A und der GB 1 331 756 A bekannten Schlauchaktuators können der EP 0 146 261 B1, der EP 0 161 750 B1, der WO 00/61951, der WO 00/61952, der DE 195 31 097 C2 und der DE 199 17 483 A1 entnommen werden. Die bisherigen Anwendungen bekannter Schlauchaktuatoren liegen im quasistatischen, d. h. niederfrequenten Bereich.

Der Erfindung liegt die Aufgabe zugrunde, ein Kraftfahrzeug der eingangs beschriebenen Art aufzuzeigen, bei dem die Torsiorisstabilisatoren auch zur Unterdrückung statischer Torsionen der Karosserie des Kraftfahrzeugs geeignet sind.

Erfindungsgemäß wird diese Aufgabe durch ein Kraftfahrzeug mit den Merkmalen des Patentanspruchs gelöst. Mit hydraulischen Aktuatoren können grundsätzlich größere Längenveränderungen der Torsionsstabilisätoren erreicht werden, als dies mit Piezoelementen der Fall ist. So eröffnet sich bei dem neuen Kraftfahrzeug auch der Bereich der statischen Torsionen der aktiven Unterdrückung. Gleichzeitig stellt sich heraus, daß der typische Frequenzbereich dynamischer Torsionsschwingungen zwischen 10 und 20 Hz mit hydraulischen Aktuatoren gut beherrschbar ist.

Allerdings sind nicht alle hydraulischen Aktuatoren für die Verwendung bei dem neuen Kraftfahrzeug gleichermaßen gut geeignet. Herkömmliche Hydraulikzylinder weisen im Vergleich zu dem Druck des eingesetzten Hydraulikmediums und ihrem Wirkdurchmesser nur eine vergleichsweise geringe Kraftentwicklung zwischen ihren Anbindungspunkten auf. Deutlich günstigere Verhältnisse sind bei hydraulischen Schlauchaktuatoren gegeben, die sich bei Beaufschlagung ihres Innenraums mit einem Hydraulikmedium im Durchmesser erweitern und gleichzeitig zwischen ihren Anbindungspunkten verkürzen. Konkret kann bei der Verwendung solcher ansich bekannter Schlauchaktuatoren im Vergleich zu herkömmlichen Hydraulikzylindern die entwickelte Kraft zwischen den Anbindungspunkten etwa verfünffacht werden. Ihre Verwendung ist daher bei dem neuen Kraftfahrzeug besonders bevorzugt. Dabei stellte sich überraschender Weise heraus, daß die fehlende Druckstabilität und auch die fehlende Knickstabilität von hydraulischen Schlauchaktuatoren bei ihrer erfindungsgemäßen Verwendung in dem neuen Kraftfahrzeug nicht von Nachteil sind, wenn die Schlauchaktuatoren im Grundzustand des Kraftfahrzeug soweit mit Hydraulikmedium beaufschlagt sind, daß eine Zugvorspannung zwischen ihren Anbindungspunkten realisiert ist, die dann zur aktiven Torsionsunterdrückung im statischen und dynamischen Bereich noch ausreichend verringert oder vergrößert werden kann, ohne daß der Vorspannungsbereich einerseits verlassen wird oder andererseits an seine obere Grenze stößt.

Konkret können die hydraulischen Aktuatoren bei dem neuen Kraftfahrzeug in ihrem eingebauten Zustand ohne weiteres auf Längenänderungen zwischen ihren Anbindungspunkten von insgesamt mehr als 0,8 mm ansteuerbar sein. Dies liegt dramatisch über den mit Piezoelementen erreichbaren Längenänderungen im Bereich weniger zehntel Millimeter. Dabei reichen hydraulische Schlauchaktuatoren in einer Länge von typischerweise 5 bis 20 cm und einem Durchmesser von einigen Zentimetern aus, die ohne weiteres untergebracht werden können.

Den hydraulischen Aktuatoren sind vorzugsweise ein Hydraulikmittelversorgungskreislauf sowie Servoventile und Absperrventile zugeordnet. Unter einem Hydraulikmittelversorgungskreislauf ist hier ein System von Hydraulikmittelversorgungsleitungen zu verstehen, in dem das Hydraulikmittel im wesentlichen im Kreis geführt wird und so beispielsweise seinerseits gekühlt und auch zur Kühlung der hydraulischen Aktuatoren und der Ventile verwendet werden kann. Die Servoventile dienen zur Beaufschlagung der hydraulischen Aktuatoren mit den notwendigen Mengen des Hydraulikmittels. Die Absperrventile sind dazu da, einen bestimmten Füllzustand der hydraulischen Aktuatoren mit Hydraulikmittel zu konservieren, beispielsweise wenn das Fahrzeug abgestellt wird. Dies ist insbesondere dann wichtig, wenn mit den hydraulischen Aktuatoren eine Torsion des auf einer unebenen Aufstandfläche abgestellten Fahrzeugs verhindert wird und dieser Zustand nicht verlorengehen soll.

Die Steuerung für die Torsionsstabilisatoren bei dem neuen Kraftfahrzeug weist zumindest einen Sensor auf, der die dynamische Torsion der Karosserie des Kraftfahrzeugs registriert. Derselbe oder ein zusätzlicher Sensor kann dafür vorgesehen sein, auch die statische Torsion der Karosserie zu registrieren, um auch dieser entgegenzuwirken. Ein Sensor, der diese beiden Aufgaben erfüllt, ist beispielsweise ein Dehnungssensor an einem Querblech der Karosserie vor dem Kofferraum des Kraftfahrzeugs, weil sich an diesem bei zumindest in den meisten Cabrios vorhandenen Querblech alle Torsionen der Karosserie deutlich zeigen.

Der Steuerung kann weiterhin ein Biegesensor zugeordnet sein, der Durchbiegungen der Karosserie registriert. Die möglichen statischen und dynamischen Längenveränderungen der Torsionsstabilisatoren mit den hydraulischen Aktuatoren sind so groß, daß neben einer Torsionskontrolle auch Durchbiegungen und Biegeschwingungen der Karosserie entgegengewirkt werden kann, selbst wenn die Torsionsstabilisatoren des neuen Kraftfahrzeugs an derselben Stelle angeordnet werden, wie herkömmliche passive Torsionsstabilisatoren an bekannten Cabrios.

Um die dynamischen Torsionsschwingungen und auch Biegeschwingungen anregenden Störungen aufzuzeichnen, sind der Steuerung mindestens an den beiden Vorderachsschenkeln angeordnete Beschleunigungssensoren zuzuordnen, die Beschleunigungen in vertikaler Richtung registrieren. Auf diese Weise werden Fahrbahnunebenheiten erfaßt. Kombiniert werden können die Beschleunigungssensoren an den Vorderachsschenkeln mit weiteren Beschleunigungssensoren an den Hinterachsschenkeln. Es ist aber auch eine Kombination mit einem Geschwindigkeitssensor des Kraftfahrzeugs möglich. Die mit diesem erfaßte Geschwindigkeit läßt eine Abschätzung zu, wann Störungen an der Vorderachse auch an der Hinterachse auftreten.

Darüberhinaus ist der Steuerung vorzugsweise mindestens ein Zustandssensor zugeordnet, der den aktuellen Betriebszustand des Kraftfahrzeugs registriert. Zu diesem Betriebszustand gehört beispielsweise die aktuelle Beladung des Kraftfahrzeugs sowie der Zustand des Dachs, d. h. auf oder zu. Der Betriebszustand des Kraftfahrzeugs hat erheblichen Einfluß darauf, wie Störungen potentiell in der Lage sind, Torsionsschwingungen oder Torsionen der Karosserie zu verursachen und auch, wie diesen Torsionen bzw. Torsionsschwingungen effektiv entgegengewirkt werden kann.

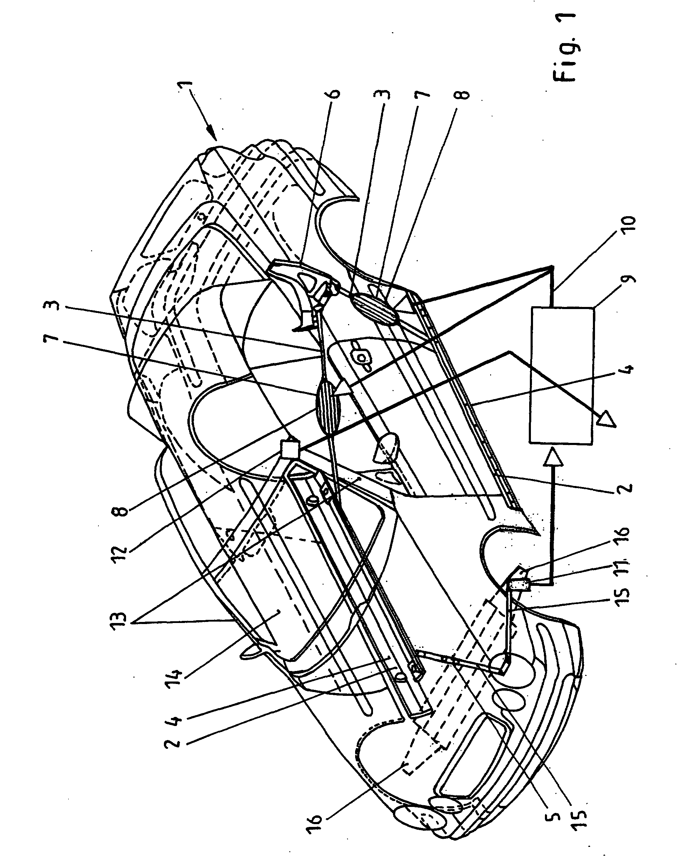

Die Erfindung wird im folgenden anhand eines Ausführungsbeispiels näher erläutert und beschrieben, dabei zeigt
- Fig. 1: die Umrisse der Karosserie eines Cabrios mit daran angeordneten Torsionsstabilisatoren.

Die in Fig. 1 dargestellte Karosserie 1 ist diejenige eines Cabrios. Ihr fehlt ein festes Dach, das bei herkömmlichen Kraftfahrzeugen die Karosserie gegenüber Torsionen um die Längsachse und Durchbiegungen um eine im Bereich der Türöffnungen verlaufende Querachse aussteift. Um das fehlende Dach zu kompensieren, sind an der Karosserie 1 Biegestabilisatoren 2 und Torsionsstabilisatoren 3 und 15 vorgesehen. Bei den Biegestabilisatoren 2 handelt es sich um verstärkte Schweller 4, die unterhalb der Türöffnungen durchlaufen. Bei den vorderen Torsionsstabilisatoren 15 handelt es sich um passive Verstärkungsstreben 5, die einerseits an den Schwellern 4 und andererseits an einem vorderen, hier nicht näher dargestellten Abstützpunkt angreifen. Die hinten angeordneten Torsionsstabilisatoren 3 greifen ebenfalls einerseits an den Schwellern 4 an. Ihre rückwärtige Verankerung ist an einem Abstützblech 6 vorgesehen. Darüberhinaus sind die hinteren Torsionsstabilisatoren 3 keine druckund biegefesten Streben. Vielmehr weisen sie über einen Teil ihrer Längserstreckung hydraulische Aktuatoren 7 in Form von Schlauchaktuatoren 8 auf, die weder eine nennenswerte Drucksteifigkeit noch eine nennenswerte Knicksteifigkeit besitzen.

Im Grundzustand des jeweiligen Fahrzeugs werden die Schlauchaktuatoren 8 von einer Steuerung 9 so mit Hydraulikmedium 10 beaufschlagt, daß sie eine mittlere Vorspannung zwischen ihren Anbindungspunkten an den Schwellern 4 und dem Abstützblech 6 hervorrufen. Zur Verhinderung von Torsionen der Karosserie 1 wird dann diese Vorspannung teilweise abgebaut oder aber vergrößert, um auf die Karosserie 1 einwirkende Kräfte zu kompensieren. Dabei wird darauf geachtet, daß die von den Schlauchaktuatoren 8 aufgebrachte Spannung vorzugsweise niemals auf null abfällt. Dabei ergeben sich Längenveränderungen der hinteren Torsionsstabilisatoren 3 in der Größenordnung von 1 mm, womit sowohl im dynamischen als auch im statischen Bereich Torsionen der Karosserie 1 weitestgehende verhindert werden können. Die Ansteuerung der Schlauchaktuatoren 8 durch die Steuerung 9 mit dem Hydraulikmedium 10 erfolgt in Abhängigkeit von Beschleunigungssensoren 11, die ein Störsignal im Bereich der Achsschenkel 16 in vertikaler Richtung erfassen. Typischerweise sind im Bereich der Achsschenkel 16 aller vier Räder Beschleunigungssensoren 11 vorgesehen. Weiterhin erfaßt ein Sensor 12 im Bereich des oberen Endes der A-Säulen 13 bzw. am oberen Rand der Windschutzscheibe 14 verbleibende Querschwingungen der Karosserie 1 als Rückkopplungssignal. Auf diese Weise sind jedoch nur Torsionen im dynamischen Bereich beherrschbar. Für statische Torsionen muß ein zusätzlicher Sensor, beispielsweise als Dehnungssensor an einem durch Torsionen der Karosserie 1 beanspruchten Blech vorgesehen werden. Dieser Sensor kann dann auch den Sensor 12 ersetzen.

Ein Fahrzeug mit der Karosserie 1 gemäß Fig. 1 kann durch geeignete Beaufschlagung der Schlauchaktuatoren 8 mit Hydraulikmedium auch auf einem unebenen Untergrund ohne Torsion der Karosserie 1 abgestellt werden. Diese Beaufschlagung der Schlauchaktuatoren 8 kann durch hier nicht dargestellte Absperrventile konserviert werden, so daß die unerwünschten Torsionen auch nicht bei einer vorläufigen Außerbetriebnahme des Kraftfahrzeugs in dem Zeitraum bis zur nächsten Inbetriebnahme auftreten.

### BEZUGSZEICHENLISTE

- 1 -: Karosserie
- 2 -: Biegestabilisator
- 3 -: Torsionsstabilisator
- 4 -: Schweller
- 5 -: Strebe
- 6 -: Abstützblech
- 7 -: hydraulischer Aktuator
- 8 -: Schlauchaktuator
- 9 -: Steuerung
- 10 -: Hydraulikmedium

- 11 -: Beschleunigungssensor
- 12 -: Sensor
- 13 -: A-säule
- 14 -: Windschutzscheibe
- 15 -: Torsionsstabilisatoren
- 16 -: Achsschenkel

## Patentansprüche

1. Kraftfahrzeug, insbesondere Cabrio, mit mindestens einem zwei Karosserieteile des Kraftfahrzeugs miteinander verbindenden Torsionsstabilisator (3), der vorgesehen ist, Torsionen der Karosserie (1) des Kraftfahrzeugs zu unterdrücken, und der von einer Steuerung aktiv auf Änderungen seiner Länge zwischen seinen Anbindungspunkten an die Karosserieteile angesteuert ist, **dadurch gekennzeichnet, dass** der Torsionsstabilisator (3) einen hydraulischen Aktuator (7) aufweist, der im Grundzustand des Kraftfahrzeugs soweit mit Hydraulikmedium beaufschlagt ist, daß eine Zugvorspannung zwischen seinen Anbindungspunkten vorliegt, die zur aktiven Torsionsunterdrückung verringerbar und vergrößerbar ist.

2. Kraftfahrzeug nach Anspruch 1, **dadurch gekennzeichnet, daß** der hydraulische Aktuator (7) ein Schlauchaktuator (8) ist, der sich bei Beaufschlagung seines Innenraums mit einem Hydraulikmedium (10) im Durchmesser erweitert und gleichzeitig zwischen seinen Anbindungspunkten verkürzt.

3. Kraftfahrzeug nach Anspruch 1 oder 2, **dadurch gekennzeichnet, daß** der hydraulische Aktuator (7) auf Längenänderungen zwischen seinen Anbindungspunkten von mehr als 0,8 mm ansteuerbar ist.

4. Kraftfahrzeug nach Anspruch 1, 2 oder 3, **dadurch gekennzeichnet, daß** dem hydraulischen Aktuator (7) ein Hydraulikmittelversorgungskreislauf sowie Servoventile und Absperrventile zugeordnet sind.

5. Kraftfahrzeug nach einem der Ansprüche 1 bis 4, **dadurch gekennzeichnet, daß** der Steuerung (9) mindestens ein Sensor (12) zugeordnet ist, der dynamische Torsionen der Karosserie (1) des Kraftfahrzeugs registriert.

6. Kraftfahrzeug nach Anspruch 5, **dadurch gekennzeichnet, daß** der Steuerung (9) mindestens ein Sensor zugeordnet ist, der statische Torsionen der Karosserie (1) registriert.

7. Kraftfahrzeug nach Anspruch 6, **dadurch gekennzeichnet, daß** der Sensor ein Dehnungssensor an einem Querblech der Karosserie (1) vor dem Kofferraum des Kraftfahrzeugs ist, der die statische und die dynamischen Torsionen der Karosserie (1) registriert.

8. Kraftfahrzeug nach einem der Ansprüche 5 bis 7, **dadurch gekennzeichnet, daß** der Steuerung (9) mindestens ein Biegesensor zugeordnet ist, der Durchbiegungen der Karosserie (1) registriert.

9. Kraftfahrzeug nach einem der Ansprüche 5 bis 8, **dadurch gekennzeichnet, daß** der Steuerung (9) mindestens an den beiden Vorderachsschenkeln angeordnete Beschleunigungssensoren (11) zugeordnet sind, die Beschleunigungen in vertikaler Richtung registrieren.

10. Kraftfahrzeug nach einem der Ansprüche 5 bis 9, **dadurch gekennzeichnet, daß** der Steuerung (9) mindestens ein Zustandssensor zugeordnet ist, der den aktuellen Betriebszustand des Kraftfahrzeugs registriert.

## Claims

1. A motor vehicle, particularly a convertible, comprising at least one torsion stabilizer (3) which connects two body parts of the motor vehicle to each other, which is provided for suppressing torsions of the body (1) of the motor vehicle, and which is actively operated by a control unit to change its length between its connection points to the body parts, **characterized in that** the torsion stabilizer (3) comprises a hydraulic actuator (7) which, in the base state of the motor vehicle, is loaded with hydraulic medium to such an extend that a pulling preload is present between the connecting points, which is reducable and increasable for active torsion suppression.

2. The motor vehicle of claim 1, **characterized in that** the hydraulic actuator (7) is a hose actuator (8) which, upon its interior being loaded with hydraulic medium, expands with respect to its diameter and at the same time shortens between its connecting points.

3. The motor vehicle of claim 1 or 2, **characterized in that** the hydraulic actuator (7) is operatable to change its length between its connection points by more than 0.8 mm.

4. The motor vehicle of claim 1, 2 or 3, **characterized in that** a hydraulic medium supply circuit as well as servo valves and locking valves are associated with said hydraulic actuator (7).

5. The motor vehicle of any of the claims 1 to 4, **characterized in that** at least one sensor (12) is associated with said control unit (9), which detects dynamic torsions of the body (1) of the motor vehicle.

6. The motor vehicle of claim 5, **characterized in that** at least one sensor is associated with said control unit (9), which detects static torsions of the body (1).

7. The motor vehicle of claim 6, **characterized in that** the sensor is a strain sensor on a transverse metal sheet located in front of the boot of the motor vehicle, which detects the static and dynamic torsions of the body (1).

8. The motor vehicle of any of the claims 5 to 7, **characterized in that** a deflexion sensor is associated with the control unit (9), which detects deflexions of the body (1).

9. The motor vehicle of any of the claims 5 to 8, **characterized in that** at least two acceleration sensors (11) are associated with the control unit (9), which are arranged on the two front axle stubs and which detect accelerations in vertical direction.

10. The motor vehicle of any of the claims 5 to 9, **characterized in that** at least one state sensor is associated with said control unit (9), which detects the present operation state of the motor vehicle.

## Revendications

1. Véhicule automobile, en particulier cabriolet, comportant au moins un stabilisateur de torsion (3) reliant entre elles deux parties de la carrosserie du véhicule automobile, qui est prévu pour supprimer les torsions de la carrosserie (1) du véhicule automobile, et qui est commandé activement par une commande, en vue de variations de sa longueur entre ses points d'attache aux parties de la carrosserie, **caractérisé en ce que** la barre de torsion (3) comporte un actionneur hydraulique (7) qui, dans l'état de base du véhicule automobile, reçoit un fluide hydraulique jusqu'à ce qu'il existe une précontrainte de traction entre ses points d'attache, laquelle peut être réduite et accrue.

2. Véhicule automobile selon la revendication 1, **caractérisé en ce que** l'actionneur hydraulique (7) est un actionneur à tuyau (8) qui, lorsque son volume intérieur reçoit un fluide hydraulique (10), s'élargit dans son diamètre et se raccourcit en même temps entre ses points d'attache.

3. Véhicule automobile selon la revendication 1 ou 2, **caractérisé en ce que** l'actionneur hydraulique (7) peut être commandé en vue de variations de sa longueur de plus de 0,8 mm entre ses points d'attache.

4. Véhicule automobile selon la revendication 1, 2 ou 3, **caractérisé en ce que** à l'actionneur hydraulique (7) sont associés un circuit d'alimentation en fluide hydraulique ainsi que des servo-soupapes et des soupapes d'arrêt.

5. Véhicule automobile selon l'une des revendications 1 à 4, **caractérisé en ce que** à la commande (9) est associé au moins un capteur (12) qui enregistre des torsions dynamiques de la carrosserie (1) du véhicule automobile.

6. Véhicule automobile selon la revendication 5, **caractérisé en ce que** à la commande (9) est associé au moins un capteur qui enregistre des torsions statiques de la carrosserie (1).

7. Véhicule automobile selon la revendication 6, **caractérisé en ce que** le capteur est une sonde d'allongement sur une tôle transversale de la carrosserie (1) devant le coffre à bagages du véhicule automobile, qui enregistre les torsions statiques et dynamiques de la carrosserie (1).

8. Véhicule automobile selon l'une des revendications 5 à 7, **caractérisé en ce que** à la commande (9) est associé au moins un capteur de flexion qui enregistre les flexions de la carrosserie (1).

9. Véhicule automobile selon l'une des revendications 5 à 8, **caractérisé en ce que** à la commande (9) sont associés au moins des capteurs d'accélération (11) disposés sur les deux branches de l'essieu avant, qui enregistrent des accélérations dans la direction verticale.

10. Véhicule automobile selon les revendications 5 à 9, **caractérisé en ce que** à la commande (9) est associé au moins un capteur d'état qui enregistre l'état de fonctionnement actuel du véhicule automobile.
